# EUROPEAN PATENT APPLICATION

(11) **EP 4 660 497 A1**
(43) Date of publication of application: **10.12.2025**
(21) Application number: 25180839.0
(22) Date of filing: 04.06.2025
(51) Int. Cl.: F16K 15/04, F16K 17/04, F16K 27/02

(54) **AIRCRAFT PRESSURE RELIEF VALVES**

(30) Priority: 07.06.2024 IN 202411044298
(71) Applicant: Hamilton Sundstrand Corporation, Charlotte, NC 28217-4578 (US)
(72) Inventor: K, Vembu, 614616 Tamil Nadu (IN); VENUGOPAL, Yogendra Bysani, 560036 Bangalore (IN); SUNDAR, Chandan Hadya Mohan, 560040 Bangalore (IN)
(74) Representative: Dehns

(57) **Abstract**

Pressure relief valves include a valve housing (206, 300) having an inlet end wall (310) and an inner cavity defined within the valve housing (206, 300). An inlet opening (208, 308, 408) defining a valve seat is formed within the inlet end wall (310). A valve ball (202, 422) is configured to sealingly engage with the valve seat to seal the inlet opening (208, 308, 408). A ball carrier (214, 424) is arranged to retain the valve ball (202, 422) between the ball carrier (214, 424) and the inlet end wall (310). A biasing element (204) is configured to bias the ball carrier (214, 424) toward the inlet end wall (310). An end stop element is configured to threadedly engage with an interior surface of the valve housing (206, 300) and the biasing element (204) is biased against a stop surface of the end stop element. A locking nut is configured to threadedly engage with an end of the end stop element and secure the end stop element to the valve housing (206, 300).

## Description

### CROSS-REFERENCE TO RELATED APPLICATIONS

This application claims the benefit of Indian Application No. 202411044298 filed June 7, 2024.

### BACKGROUND

The subject matter disclosed herein generally relates to aircraft pressure relief valves and, more particularly, to improved aircraft pressure relief valves and methods of manufacturer.

Actuators, such as actuators onboard aircraft, may require pressure relief valves to ensure that excess pressure does not build up within a system. For example, aircraft engines are enclosed by nacelle structures which include various cowl doors that provide accessibility to engine elements, such as for regular maintenance. To open and close these engine cowl doors, the nacelle is equipped with actuators. Some such actuators include oil reservoirs, pumping elements and actuator elements that are part of the nacelle. In other configurations, only the actuators are part of nacelle which may be powered by external ground support equipment (e.g., hand pump, brought by maintenance personnel). In such systems, a pressure relief valve may be provided with the actuator to safeguard from over pressurization failure. The pressure relief valve may be provided in case the cowl door is blocked. For example, during operation, the pressure relief valve is opened once the pumping pressure from the ground maintenance pump has exceeded a set point so as to limit the force that the hydraulic actuator can apply to the door structure if the door is blocked.

A conventional pressure relief valve includes a simple ball and spring assembly where, while the valve is closed, during normal operation, the ball is seated, under the bias of the spring, in a valve seat. If the pressure from the pumped fluid acting on the ball against the spring force exceeds a set point, it pushes the ball out of the seat thus enabling the fluid to flow out of the pressure line to the cowl door actuator thus releasing the pressure on the actuator and thus on the cowl door.

Manufacture of such pressure relief valves may be costly due to an iterative process designed to ensure proper functionality of the pressure relief valves. For example, a two-step iterative process may be implemented that involves a coining step to ensure proper seating of the ball and shim selection step to select a shim that is arranged with the pressure relief valve and serves to ensure proper spring preload and operation of the pressure relief valve. During manufacture, after coining and/or shim selection, the pressure relief valve must be tested, and if any of the tests fail, one or more of the steps must be repeated until a passing of the tests is achieved. This iterative process takes time. In view of the above and other considerations, improvements to pressure relief valves and manufacture thereof may be beneficial.

### SUMMARY

According to some embodiments, pressure relief valves are provided. The pressure relief valve include a valve housing having an inlet end having an inlet end wall, an outlet end, and an inner cavity defined within the valve housing extending from the inlet end to the outlet end, an inlet opening formed within the inlet end wall and defining a valve seat, a valve ball arranged within the inner cavity and configured to sealingly engage with the valve seat to seal the inlet opening when the valve ball is seated in the valve seat, a ball carrier arranged within the inner cavity and positioned to retain the valve ball between the ball carrier and the inlet end wall, a biasing element arranged within the inner cavity and configured to bias the ball carrier toward the inlet end wall, an end stop element configured to threadedly engage with an interior surface of the valve housing, wherein the biasing element is biased against a stop surface of the end stop element, and a locking nut configured to threadedly engage with an end of the end stop element and secure the end stop element to the valve housing.

**In** addition to one or more of the features described herein, or as an alternative, further embodiments of the pressure relief valves may include a locking washer arranged between the locking nut and the valve housing.

**In** addition to one or more of the features described herein, or as an alternative, further embodiments of the pressure relief valves may include that the valve housing has a locking surface at an outlet end of the valve housing, wherein the locking washer is secured between the locking nut and the locking surface.

**In** addition to one or more of the features described herein, or as an alternative, further embodiments of the pressure relief valves may include a locking cable configured to connect the valve housing, the locking nut, and the end stop element.

**In** addition to one or more of the features described herein, or as an alternative, further embodiments of the pressure relief valves may include that each of the valve housing, the locking nut, and the end stop element include a respective locking aperture, and wherein the locking cable passes through each of the respective locking apertures.

**In** addition to one or more of the features described herein, or as an alternative, further embodiments of the pressure relief valves may include that the inlet opening is defined by a cylindrical portion and a conical portion, wherein the cylindrical portion extends from an exterior surface of the inlet end wall to a valve seat depth, and the conical portion extends from the valve seat depth to an interior surface of the inlet end wall.

In addition to one or more of the features described herein, or as an alternative, further embodiments of the pressure relief valves may include that the conical portion defines a valve seat angle between 45° and 75°.

In addition to one or more of the features described herein, or as an alternative, further embodiments of the pressure relief valves may include that the conical portion defines a valve seat angle of between 60° and 70°.

In addition to one or more of the features described herein, or as an alternative, further embodiments of the pressure relief valves may include that the valve housing comprises a first housing portion defining a first subcavity and a second housing portion defining a second subcavity.

In addition to one or more of the features described herein, or as an alternative, further embodiments of the pressure relief valves may include that the valve ball, ball carrier, and biasing element are arranged within the first subcavity.

In addition to one or more of the features described herein, or as an alternative, further embodiments of the pressure relief valves may include that the first housing portion has a smooth interior surface that defines the first subcavity.

In addition to one or more of the features described herein, or as an alternative, further embodiments of the pressure relief valves may include that the second housing portion has a threaded interior surface, wherein the end stop element is configured to threadedly engage with the threaded interior surface of the second housing portion.

In addition to one or more of the features described herein, or as an alternative, further embodiments of the pressure relief valves may include that the end stop element is configured to fill at least a portion of each of the first subcavity and the second subcavity.

In addition to one or more of the features described herein, or as an alternative, further embodiments of the pressure relief valves may include that a filter is installed within a filter support cavity of the end stop element within the first subcavity.

In addition to one or more of the features described herein, or as an alternative, further embodiments of the pressure relief valves may include that a fluid flow path is defined through the pressure relief valve when the valve ball is unseated from the valve seat, the fluid flow path extending from the inlet opening, around the valve ball, through one or more flow apertures of the ball carrier, past the biasing element, through a flow passed defined within the end stop element, to an outlet opening defined by an end of the end stop element.

**In** addition to one or more of the features described herein, or as an alternative, further embodiments of the pressure relief valves may include that the end stop element defines a keyway at an end thereof, the keyway configured to receive a key to cause rotation of the end stop element and adjust an axial position of the end stop element relative to the valve housing.

**In** addition to one or more of the features described herein, or as an alternative, further embodiments of the pressure relief valves may include that the end stop element comprises a support portion, a first threaded portion, and a second threaded portion.

In addition to one or more of the features described herein, or as an alternative, further embodiments of the pressure relief valves may include that the support portion is configured to receive a filter therein.

In addition to one or more of the features described herein, or as an alternative, further embodiments of the pressure relief valves may include that the first threaded portion comprises a first thread on an exterior surface of the end stop element, wherein the first thread is configured to threadedly engage with threads on an interior surface of the valve housing.

In addition to one or more of the features described herein, or as an alternative, further embodiments of the pressure relief valves may include that the second threaded portion comprises a second thread on an exterior surface of the end stop element, wherein the second thread is configured to threadedly engage with the locking nut.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic illustration of a conventional pressure relief valve;
FIG. 1B is a schematic illustration of the components of the pressure relief valve of FIG. 1A shown separately;
FIG. 2A is a schematic illustration of a pressure relief valve in accordance with an embodiment of the present disclosure;
FIG. 2B is a schematic illustration of the components of the pressure relief valve of FIG. 2A shown separately;
FIG. 3A is a schematic illustration of a valve housing for a pressure relief valve in accordance with an embodiment of the present disclosure;
FIG. 3B is a schematic cross-sectional illustration of the valve housing of FIG. 3A;
FIG. 4A is a schematic illustration of a portion of a valve housing of a pressure relief valve in accordance with an embodiment of the present disclosure;
FIG. 4B is a schematic illustration of the portion shown in FIG. 4A with a valve ball and ball carrier arranged therewith;
FIG. 5 is a schematic illustration of a ball carrier for a pressure relief valve in accordance with an embodiment of the present disclosure;
FIG. 6A is a schematic illustration of an end stop element of a pressure relief valve in accordance with an embodiment of the present disclosure;
FIG. 6B is a schematic cross-sectional illustration of the end stop element of FIG. 6A; and
FIG. 7 is a schematic illustration of a pressure relief valve in accordance with an embodiment of the present disclosure, shown in an assembled state.

### DETAILED DESCRIPTION

As shown and described herein, various features of the disclosure will be presented. Various embodiments may have the same or similar features. Although similar reference numbers may be used in a generic sense, various embodiments will be described and various features may include changes, alterations, modifications, etc. as will be appreciated by those of skill in the art, whether explicitly described or otherwise would be appreciated by those of skill in the art. Further, it will be appreciated that aspects of the various embodiments disclosed herein may be combined in different ways without departing from the scope of the present disclosure.

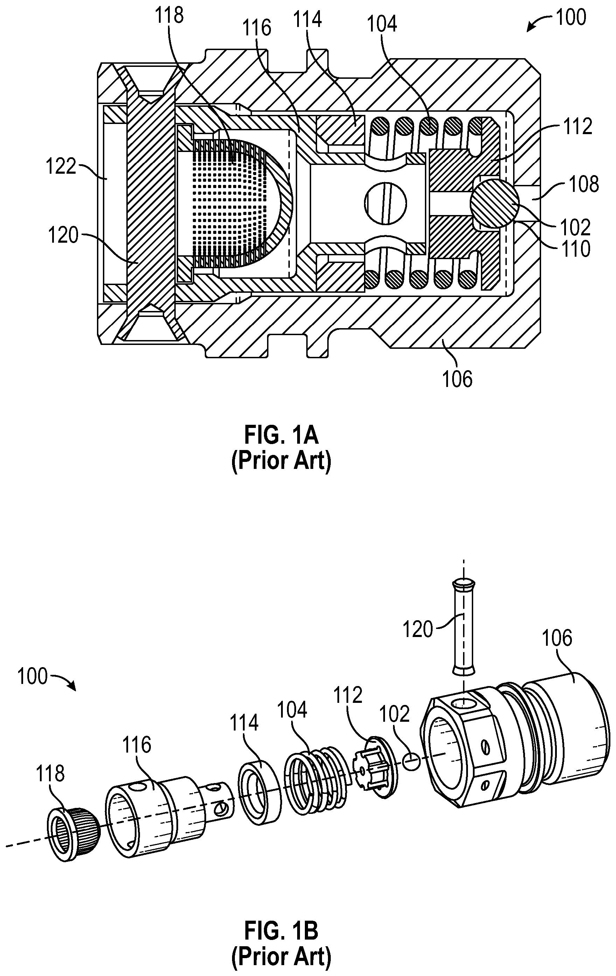

Referring to FIGS. 1A-1B, a conventional pressure relief valve 100 is shown. The pressure relief valve 100 includes a valve ball 102 supported by a biasing element 104, such as a spring or the like, mounted in a valve housing 106. An inlet opening 108 is provided in the housing 106 on a side or end of the pressure relief valve 100 where a pressurized fluid is introduced from a pump, actuator, or other fluid source (e.g., fluid under pressure). For example, the inlet opening 108 of the pressure relief valve 100 may be fluidly coupled to a flow path or fluid path through an actuator of an aircraft actuator (e.g., cowl door actuator). In normal operation, the spring force provided by the biasing element 104 will push, urge, or otherwise bias the valve ball 102 into a valve seat 110 defined in the housing 106 at the inlet opening 108. The valve ball 102, in a normal state, will be biased into contact with the valve seat 110 so as to close the inlet opening 108 against the ingress of pressurized fluid from the inlet opening 108 and into the interior of the pressure relief valve 100.

The valve ball 102 is positioned within the housing 106 of pressure relief valve 100 at the inlet opening 108 and between an inlet end of the housing 106 and a ball carrier 112. The ball carrier 112 is sized, shaped, and positioned, to ensure the valve ball 102 is positioned at the inlet opening 108. The biasing element 104 is biased toward the inlet opening 108 and arranged between a shim 114 and the ball carrier 112. The shim 114 is used to modify the set pressure of the pressure relief valve 100. The shim 114 is a customizable component which has an axial length (relative to a flow direction or axis through the pressure relief valve 100). The shim 114 is positioned between the biasing element 104 and an end stop element 116. The end stop element 116 is installed into the pressure relief valve 100 to limit axial movement of the ball carrier 112 and to provide a fixed structure against which the biasing element 104 can be biased. To allow for adjustment and setting of the pressure relief valve 100, the shim 114 may be arranged between the end stop element 116 and the biasing element 104. The axial length of the shim 114 may be selected based on various factors, include critical pressures associated with the pressure relief valve 100, in combination with the biasing force provided by the biasing element 104 which is biased against the shim 114. A filter 118 may be provided within the pressure relief valve 100 and may be arranged to capture any debris or floating objects that might otherwise damage the pressure relief valve 100 or adversely affect its operation. The end of the pressure relief valve 100 opposite the inlet opening 108 may be open to atmosphere. A locking element 120 (e.g., rivet, pin, fastener, etc.) may be arranged to secure (axially) the valve ball 102, the ball carrier 112, the spring 104, the shim 114, the end stop element 116, and the filter 118 within the housing 106 of the pressure relief valve 100.

In operation, if fluid within a connected actuator exceeds a predetermined or critical value, and thus applies pressure to the valve ball 102 within the pressure relief valve 100 at the inlet opening 108, the valve ball 102 may be urged against the ball carrier 112 and thus compress the biasing element 104. As the biasing element 104 is compressed against the shim 114, the valve ball 102 will unseat from the valve seat 110 to permit fluid to pass into the interior of the housing 106 and flow around the valve ball 102 and toward an outlet 122 of the pressure relief valve 100. When the pressure of the fluid drops below the critical valve, the biasing force of the biasing element 104 will urge the valve ball 102 back into the valve seat 110 to prevent further pressure release.

During manufacture of the pressure relief valve 100, an iterative process is performed. In an example process, an actuator assembly is assembled and a pressure relief valve is assembled therewith. In the first iteration, a coining of the valve seat 110 may be performed. The coining operation may be performed to create a valve seat 110 into which the valve ball 102 may properly sit and provide a seal. In some instances, the valve seat 110 may be formed by a manual operation using a hydraulic press that forces a rounded ball into the material of the housing 106 at the interior side of the inlet opening 108. After the hydraulic press operation, a microscopic check is performed to confirm that the deformation (coin/stamp) that defines the valve seat 110 is substantially uniform and thus provide a complete fluid seal when the valve ball 102 is seated in the valve seat 110. Because this is a manual process, alignment of the housing and the coining tool can lead to variance due to non-uniform load applications and/or process errors, which can lead to incorrect and/or offset deformation. This may result in excess or undesirable leakage at limit load or leak flow rate-high failure modes. Accordingly, the valve seat 110 must be iteratively formed and tested to ensure a proper and complete seal is achieved at the desired pressure levels.

Another variable in the manufacture of the pressure relief valve 100 is the variability associated with the biasing element 104. The fitted length of the biasing element 104 is driven by the linear tolerances associated with the other components of the pressure relief valve 100. For example, although the biasing element 104 is configured to adjust in axial length, the locking element 120, the end stop element 116, the ball carrier 112, and the housing 106 are all fixed in axial length. Because of this, and linear tolerances of these components, it is difficult to choose a proper axial length of the shim 114, and thus repeated iterations to select a proper shim 114 adds to the complexity and manufacturing time.

In view of the above and other considerations, embodiments of the present disclosure are directed to an improved pressure relief valve that may eliminate various iterations during the manufacturing process while also providing for improved reliability and functionality of pressure relief valves.

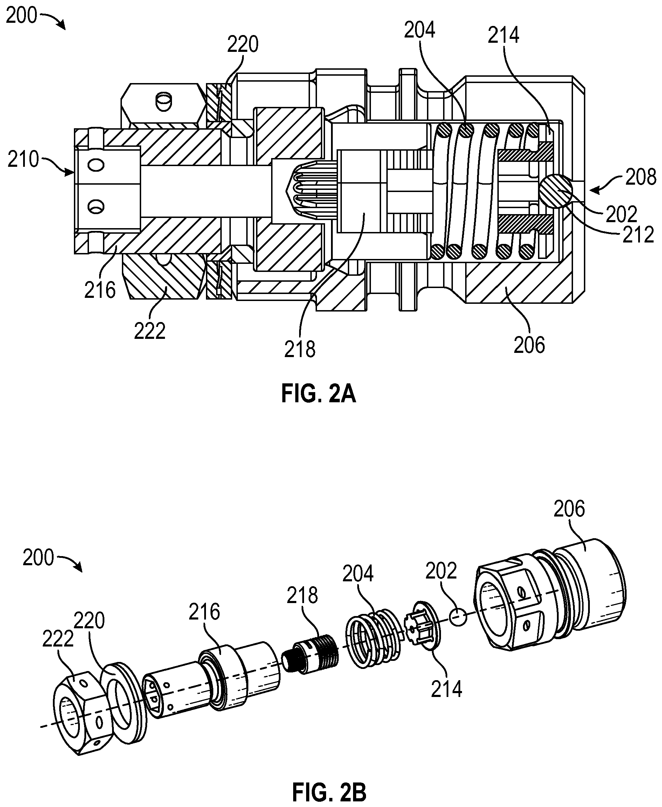

Referring now to FIGS. 2A-2B, schematic illustrations of a pressure relief valve 200 in accordance with an embodiment of the present disclosure are shown. The pressure relief valve 200 may be used onboard aircraft for ensuring release of pressure of fluid actuators or the like. The pressure relief valve 200 includes a valve ball 202 supported by a biasing element 204 mounted in a valve housing 206. An inlet opening 208 is provided in the valve housing 206 on a side or end of the pressure relief valve 200 where a pressurized fluid is introduced from a pump, actuator, or other fluid source (e.g., fluid under pressure). For example, the inlet opening 208 of the pressure relief valve 200 may be fluidly coupled to a flow path or fluid path through an actuator of an aircraft actuator (e.g., cowl door actuator). At an opposite end of the valve housing 206 from the inlet opening 208 is an outlet opening 210. When the pressure relief valve 200 is in an open state, a pressurized fluid may be vented through the pressure relief valve 200 by flowing through the inlet opening 208, around the valve ball 202, through the interior of the valve housing 206, and out the outlet opening 210, which may vent to ambient atmosphere.

In this configuration, the valve ball 202 is seated in a valve seat 212 and arranged between the valve seat 212 at the inlet opening 208 and a ball carrier 214. **In** accordance with some embodiments, the valve seat 212 may be a conical valve seat. The ball carrier 214 is biased toward the inlet opening 208 by the biasing element 204, and thus the valve ball 202 is normally seated within the valve seat 212, and thus the pressure relief valve 200 is in a normally closed or sealed state. When a fluid pressure within the inlet opening 208 exceeds a predetermined pressure value, the force acting on the valve ball 202 will overcome the biasing force of the biasing element 204, and the valve ball 202 will unseat from the valve seat 212 and the biasing element 204 will compress, and the ball carrier 214 will be urged away from the inlet opening 208. Fluid may then be permitted to flow around the valve ball 202 and into and through the pressure relief valve 200 toward the outlet opening 210.

The biasing element 204 is secured within the valve housing 206 of the pressure relief valve 200 between the ball carrier 214 and an end stop element 216. In normal operation, the spring force provided by the biasing element 204 will push, urge, or otherwise bias the valve ball 204 into the valve seat 212 defined in the valve housing 206 at the inlet opening 208. The valve ball 202, in a normal state, will be biased into contact with the valve seat 212 so as to close the inlet opening 208 against the ingress of pressurized fluid from the inlet opening 208 and into the interior of the pressure relief valve 200. In this configuration, a filter 218 is seated within one end of the end stop element 216. In some configurations, the filter 218 may be press-fit or otherwise seated within the end stop element 216. In some configurations, and as shown, the filter 218 may be oriented such that a flow of fluid (e.g., right to left on the page) will apply a force on the filter 218 to ensure the filter 218 remains seated in the end stop element 216. The end stop element 216 defines a through passage for flow of fluid and extends outward from an end of the valve housing 206. The end stop element 216 may be secured to the valve housing 206 by a threaded connection, as described herein. In this illustrative configuration, a locking washer 220 and a locking nut 222 are provided to be secured to an end of the end stop element 216, with the locking washer 220 being secured against the valve housing 206 by the locking nut 222.

In operation, the valve ball 202 is biased against the valve seat 212 to obstruct flow through the inlet opening 208. To secure the valve ball 202 into the valve seat 212, the ball carrier 214 is urged toward the inlet opening 208 by a biasing force applied by the biasing element 204. The biasing element 204 is fixed in axial position at one end by the end stop element 216, and the other end of the biasing element 204 is arranged to apply force to the ball carrier 214. When the biasing force is overcome by a fluid pressure applied to the valve ball 202 at the inlet opening 208, the valve ball 202 will unseat from the valve seat 212 as the valve ball 202 applies counter force against the ball carrier 214 and thus compress the biasing element 204. With the valve ball 202 unseated, fluid may flow through the inlet opening 208, around the valve ball 202 and into the interior of the valve housing 206. The fluid will then pass through the filter 218, through an interior bore or passages within the end stop element 216, and then out through the outlet opening 210. When the pressure at the valve ball 202 drops due to the pressure release, the biasing force of the biasing element 204 will urge the ball carrier 214 to move the valve ball 202 back into sealing engagement with the valve housing 206 at the valve seat 212.

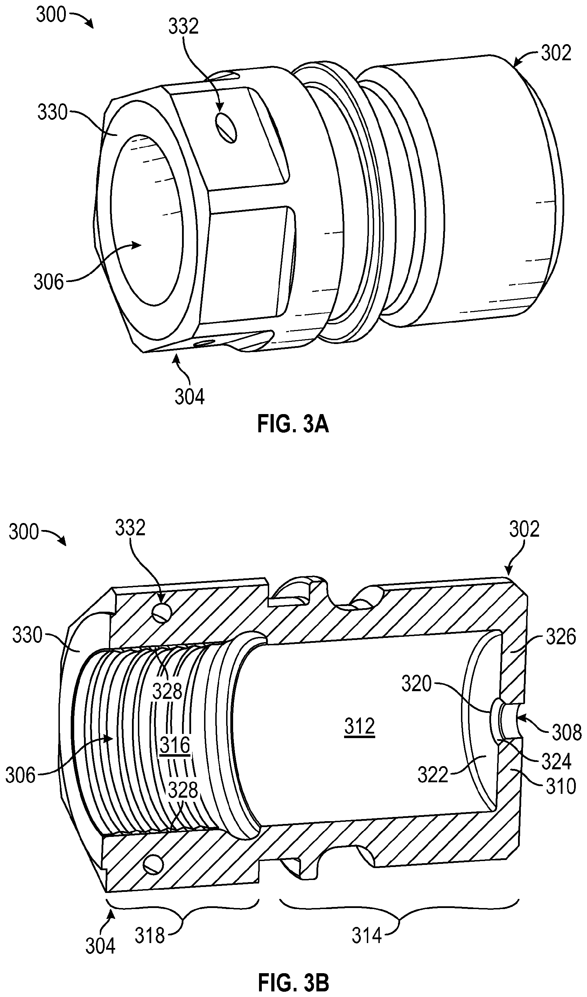

Referring now to FIGS. 3A-3B, schematic illustrations of a valve housing 300 in accordance with an embodiment of the present disclosure. The valve housing 300 may be configured to house and contain various components and structures, such as shown and described with respect to FIGS. 2A-2B. The valve housing 300 has an inlet end 302 and an outlet end 304. The valve housing 300 defines an inner cavity 306 or inner bore. The inner cavity 306 defines a fluid path from an inlet opening 308 formed in an inlet end wall 310 of the valve housing 300 to an open end defined at the outlet end 304. The inner cavity 306 is divided into a first subcavity 312 defined within a first housing portion 314 and a second subcavity 316 defined within a second housing portion 318.

The inlet end wall 310 includes a valve seat 320 defined on an interior surface 322 of the inlet end wall 310 about the inlet opening 308. The valve seat 320 may be conical and defined a sloped or angled surface that tapers inward from the interior surface 322 to a valve seat depth 324. The inlet opening 308 is conical in shape between the interior surface 322 to the valve seat depth 324 and cylindrical in shape from the valve seat depth 324 to an exterior surface 326 of the inlet end wall 310. The conical valve seat 320 is shaped to receive a valve ball and form a seal between the valve ball and the valve seat 320, thus preventing fluid flow through the inlet opening 308 when the valve ball is seated on the valve seat 320.

The inlet opening 308 provides a fluid connection, when a valve ball is unseated therefrom, through the inlet opening 308 to the first subcavity 312. The first subcavity 312 is sized to receive various components of a pressure relief valve, such as a valve ball, a ball carrier, a biasing element, a filter, and a portion of an end stop element, similar to that shown in FIGS. 2A-2B. An interior surface of the first housing portion 314 of the valve housing 300 that defines the first subcavity 312 may be a smooth surface to allow the components therein to move axial in response to fluid pressure applied to the components therein.

The first subcavity 312 is fluidly connected to the second subcavity 316, which is defined within the second housing portion 318. The second subcavity 316 is sized to receive various components of a pressure relief valve, such as a portion of the end stop element and a portion of the filter, depending on the configuration and orientation thereof, similar to that shown in FIGS. 2A-2B. An interior surface of the second housing portion 318 of the valve housing 300 that defines the second subcavity 316 may includes threads 328 which may be provided on the axial extent of the interior of the second housing portion 318, or may span a partial axial extent thereof. The threads 328 on the interior surface of the second housing portion 318 are provided for threaded engagement with a threaded exterior surface of the end stop element, as described herein. For example, when the end stop element is threadedly connected to the threads 328 of the second housing portion 318, rotation of the end stop element may cause axial movement of the end stop element relative to the valve housing 300, and thus the axial position of the end stop element and components arranged within the first subcavity 312 between the end stop element and the interior surface 322 of the inlet end wall 310 may be adjusted.

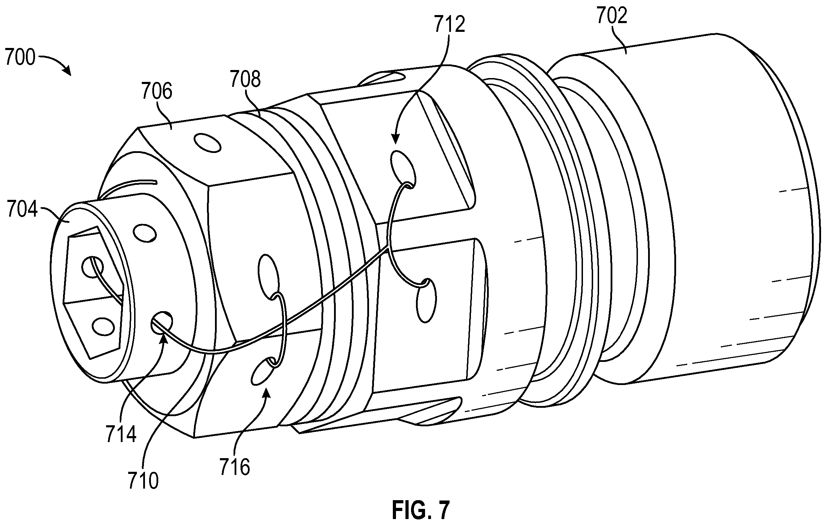

The second housing portion 318 includes a locking surface 330 that is configured to provide a surface upon which a locking washer and a locking nut may be installed, such as shown in FIGS. 2A-2B. The locking surface 330 may provide a surface upon which the locking washer may engage as a locking nut is secured and tightened about a portion of the end stop element. The second housing portion 318 also includes one or more locking apertures 332 formed within material of the valve housing 300 and not fluidly coupled to the inner cavity 306. The locking apertures 332 may provide a means for securing various components to the valve housing 300, such as providing a locations to secure the locking nut, the end stop element, and the valve housing 300 together (see, e.g., FIG. 7).

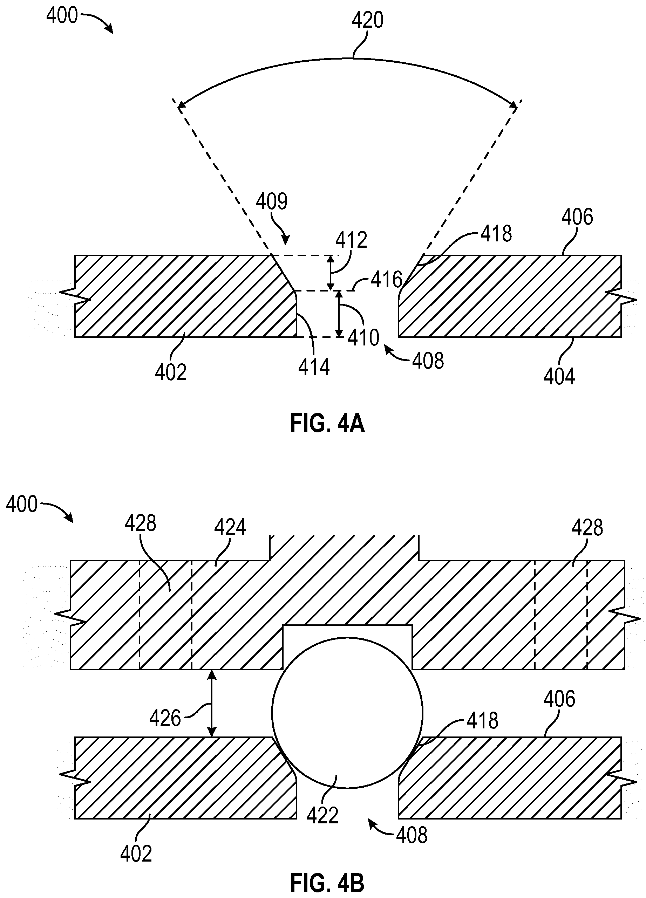

Referring now to FIGS. 4A-4B, schematic illustrations of a portion of a pressure relief valve 400 in accordance with an embodiment of the present disclosure are shown. The portion of the pressure relief valve 400 shown in FIGS. 4A-4B is of an inlet end wall 402 of the valve housing. The inlet end wall 402 has an exterior surface 404 and an interior surface 406. The interior surface 406 defines an end wall surface of a cavity or subcavity of the pressure relief valve 400. An inlet opening 408 is formed in the inlet end wall 402 and defines a passage through which fluid may flow with a valve seat 409 define on the inlet end wall 402. The valve seat 409 and the inlet opening 408 define a cylindrical portion 410 and a conical portion 412. The cylindrical portion 410 is defined by a cylindrical wall 414 that extends in a direction from the exterior surface 404 toward the interior surface 406 to a valve seat depth 416. The conical portion 412 extends from the valve seat depth 416 to the interior surface 406 and is defined by a conical wall 418. The conical wall 418 defines a valve seat angle 420. The valve seat angle 420 may be any angle between 45° and 75°, and in some embodiments may be between 60° and 70°, and in still further embodiments, the valve seat angle 420 may be 65°.

The valve seat angle 420 may be selected to ensure that a valve ball 422 (FIG. 4B) sealing engages with the conical wall 418 when the valve ball 422 is seated thereon. As shown in FIG. 4B, the valve ball 422 may be arranged between the inlet end wall 402 of the pressure relief valve 400 and a ball carrier 424. The ball carrier 424 is configured to be movable toward and away from the inlet end wall 402 by operation of forces applied to opposing sides thereof. In a closed state, the ball carrier 424 is biased toward the inlet end wall 402 by a biasing force applied by a biasing element (not shown). As such, the ball carrier 424 will force or urge the valve ball 422 into contact with the conical wall 418 and provide a seal therewith. However, if fluid pressure applied to the valve ball 422 from the inlet opening 408 exceeds a biasing force of the biasing element, the pressure will urge the valve ball 422 to unseat from the conical wall 418 and allow fluid to flow through the inlet opening 408 and into an interior of the pressure relief valve 400. The fluid may enter a gap 426 that is defined between the ball carrier 424 and the interior surface 406 and then flow through flow apertures 428 of the ball carrier 424 to pass through the ball carrier 424. When the pressure at the inlet opening 408 lessens through a pressure relief of fluid passing through the inlet opening 408, the biasing force of the biasing element may urge the ball carrier 424 back toward the interior surface 406 and thus position the valve ball 422 back in sealing engagement with the conical wall 418 of the valve seat 409.

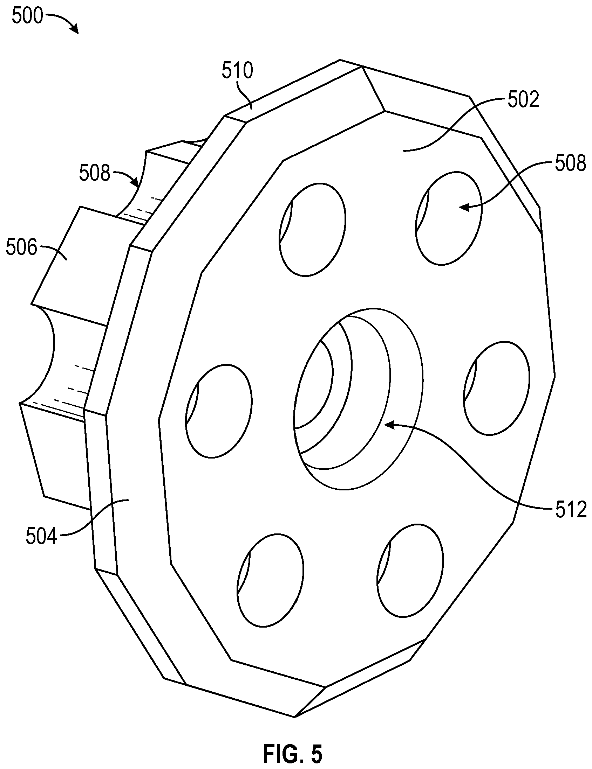

Referring now to FIG. 5, a schematic illustration of a ball carrier 500 in accordance with an embodiment of the present disclosure is shown. The ball carrier 500 may be installed within a pressure relief valve, as shown and described herein. The ball carrier 500 has a carrier body 502 with a first portion 504 and a second portion 506. The first portion 504 includes a number of flow apertures 508 that define flow passages through the carrier body 402. **In** some configurations, the first portion 504 may include an optional sealing edge 510 that is configured to sealingly engage with an interior surface of a valve housing, and thus fluid may pass through/around the ball carrier 500 only through the flow apertures 508. **In** other configurations, a seal may not be intentionally formed between the first portion 504 and the interior surface of the housing. The first portion 504 also defines a ball cavity 512 that is sized to receive and support a valve ball. The second portion 506 has a narrower diameter than the first portion, and is sized and shaped to fit within a biasing member (e.g., a coiled spring or the like), and the flow apertures 508 continue along the second portion 506.

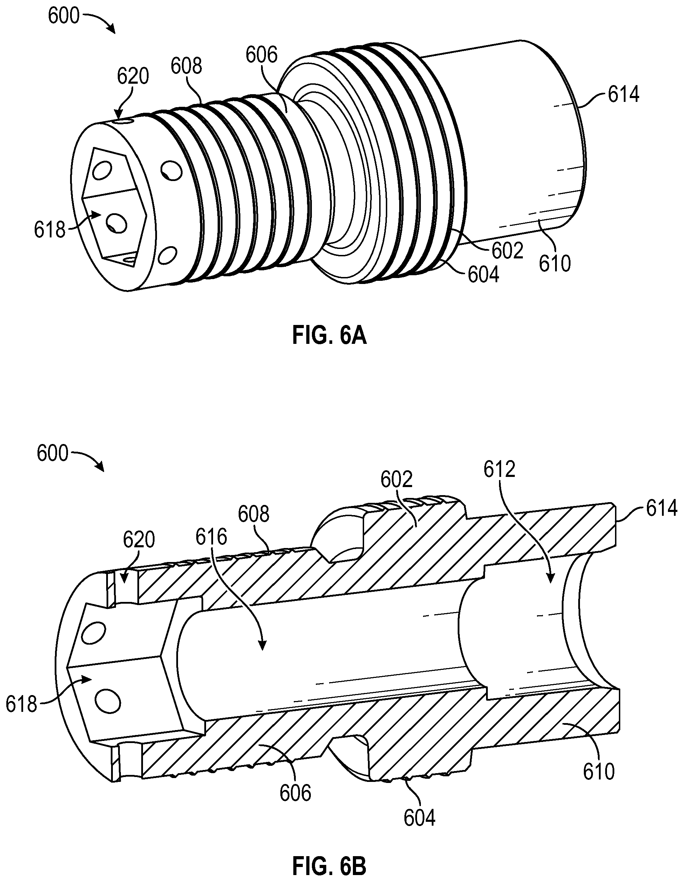

Referring now to FIGS. 6A-6B, schematic illustrations of an end stop element 600 for use with a pressure relief valve in accordance with an embodiment of the present disclosure are shown. The end stop element 600 is configured to operably engage with a valve housing, secure various components within the valve housing, and to provide a stop surface against which a biasing element may be biased. The end stop element 600 includes a first threaded portion 602 having a first thread 604 and a second threaded portion 606 having a second thread 608. The first threaded portion 602 is arranged approximately in the middle of the structure of the end stop element 600, with the second threaded portion 606 extending from one side of the first threaded portion 602. Extending from the first threaded portion 602 on a side opposite the second threaded portion 606 is a support portion 610. The support portion 610 defines a filter support cavity 612 for receiving a filter, screen, or the like. The filter support cavity 612 may be sized to provide an interference fit of a filter installed into the filter support cavity 612, thus securing the filter to or in the end stop element 600.

A stop surface 614 is defined at an end of the support portion 610 and serves as a surface upon which a biasing element may be biased. The first threaded portion 602 and the second threaded portion 606 define a flow passage 616 therein, which extends from the filter support cavity 612 to a keyway 618. The keyway 618 may have a hexagonal geometry for receiving a hex key or the like, which allows for adjustment of the end stop element 600 within a valve housing. That is, by engaging a key with the keyway 618, the end stop element 600 may be rotated, thus rotating the threaded engagement of the first threaded portion 602 (and the first thread 604) relative to a threaded portion of a valve housing (e.g., threads 328 shown in FIG. 3B), and thus adjust the axial position of the end stop element 600 relative to the valve housing. This allows for adjusting the biasing force applied by a biasing element against a ball carrier and thus defines the opening force required to be applied at a valve inlet opening to release pressure through a pressure relieve valve that incorporates the end stop element 600. The keyway 618 may include locking apertures 620. The locking apertures 620 may provide a means for securing various components to a valve housing, such as providing a locations to secure a locking nut, the end stop element 600, and a valve housing together (see, e.g., FIG. 7).

Referring now to FIG. 7, a schematic illustration of a pressure relief valve 700 in accordance with an embodiment of the present disclosure is shown. The pressure relief valve 700 may incorporate various features and components as shown and described above and may be used with actuators onboard aircraft or the like. The pressure relief valve 700 includes a valve housing 702, which may be configured as shown and described above, including a ball valve configuration arranged within the valve housing. The ball valve configuration may include, for example, a valve ball configured to sealingly engage with a valve seat at an inlet opening. The valve ball may be biased into a closed or sealed position by application of a biasing force which is applied by a combination of a biasing element and a ball carrier. A filter or the like may be arranged within the valve housing to filter fluid flowing through the pressure relief valve 700.

FIG. 7 illustrates the pressure relief valve 700 in an assembled state. As shown, an end stop element 704 is inserted into an interior of the valve housing 702. The end stop element 704 may be threadedly engaged with a portion of the interior of the valve housing 702. For example, similar to that shown and described above, a first threaded portion of the end stop element (e.g., first threaded portion 602 having first thread 604) may threadedly engage with threads on an interior surface of a subcavity of the valve housing 702 (e.g., second subcavity 316). With the end stop element 704 threadedly engaged with the valve housing 702, a locking nut 706 and a locking washer 708 are provided to be secured to an end of the end stop element 704. The locking washer 708 may be secured against the valve housing 702 by the locking nut 706. To provide additional securing redundancy, a locking cable 710 may be provided to attach the valve housing 702, the end stop element 704, and the locking nut 706 together. The locking cable 710 may pass through a set of locking apertures 712 of the valve housing 702, a set of locking apertures 714 of the end stop element 704, and a set of locking apertures 716 of the locking nut 706.

Advantageously, embodiments described herein provide for improved pressure relief valves. The pressure relief valves disclosed herein may be incorporated into aircraft actuators or the like. Advantageously, the manufacture of pressure relief valves is improved through the configuration disclosed herein along with improved operation and reliability thereof. For example, a conical valve seat provides for improved sealing engagement between a valve ball and the valve seat. By incorporating a conical valve seat, as described above, the tolerances during manufacture may be improved, reducing the precision required to mill or stamp the valve seat in the material of the valve housing. The inclusion of the conical valve seat may eliminate the need for an iterative process of coining a valve seat.

Further, advantageously, by incorporating a threaded end stop element, adjustments of a biasing force may be achieved without requiring disassembly of the assembly. That is, in the assembled state (e.g., FIG. 2A, FIG. 7), a keyway provides a mechanism for adjusting the axial position of the end stop element within the housing, and thus the biasing force of a biasing element may be adjusted. By threading the end stop element in a direction toward an inlet opening, the pressure or biasing force applied by a biasing element to a ball carrier may be increased. Similarly, by threading the end stop element in a direction away from the inlet opening, the pressure or biasing force applied by a biasing element to a ball carrier may be decreased. These thread-based adjustments enable adjustment of the pressure required to overcome the biasing force and thus open the pressure relief valve for venting of pressure through the pressure relief valve. The inclusion of the threaded end stop element eliminates the need for shims and iterative processes of adjusting an axial length of a shim to set a biasing force.

With respect to operation and reliability of the pressure relief valves disclosed herein, the configuration of the end stop element and filter provides advantages over prior systems. For example, the filter/screen may be press fit into engagement with a portion of the end stop element, securing the filter therein. The filter may be orientated such that a fluid pressure of fluid passing through the filter is in a direction to continue to seat the filter in the end stop element, and thus the filter may not become dislodged from the end stop element. Additionally, due to the adjustability due to the keyway and threaded connections, the setting of the pressure that is required to overcome the biasing force may be precisely and accurately set to a desired value without undue manufacturing iterations. These and other advantages will be appreciated by those of skill in the art in view of the teachings herein.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. A pressure relief valve comprising:
a valve housing (206, 300) having an inlet end having an inlet end wall (310), an outlet end, and an inner cavity defined within the valve housing (206, 300) extending from the inlet end to the outlet end;
an inlet opening (208, 308, 408) formed within the inlet end wall (310) and defining a valve seat;
a valve ball (202, 422) arranged within the inner cavity and configured to sealingly engage with the valve seat to seal the inlet opening (208, 308, 408) when the valve ball (202, 422) is seated in the valve seat;
a ball carrier (214, 424) arranged within the inner cavity and positioned to retain the valve ball (202, 422) between the ball carrier (214, 424) and the inlet end wall (310);
a biasing element (204) arranged within the inner cavity and configured to bias the ball carrier (214, 424) toward the inlet end wall (310);
an end stop element (600) configured to threadedly engage with an interior surface of the valve housing (206, 300), wherein the biasing element (204) is biased against a stop surface of the end stop element; and
a locking nut (706) configured to threadedly engage with an end of the end stop element and secure the end stop element to the valve housing (206, 300).

2. The pressure relief valve of claim 1, further comprising a locking washer arranged between the locking nut and the valve housing (206, 300), and optionally wherein the valve housing (206, 300) has a locking surface at an outlet end of the valve housing (206, 300), wherein the locking washer is secured between the locking nut and the locking surface.

3. The pressure relief valve of any preceding claim, further comprising a locking cable configured to connect the valve housing (206, 300), the locking nut, and the end stop element, and optionally wherein each of the valve housing (206, 300), the locking nut, and the end stop element include a respective locking aperture, and wherein the locking cable passes through each of the respective locking apertures.

4. The pressure relief valve of any preceding claim, wherein the inlet opening (208, 308, 408) is defined by a cylindrical portion and a conical portion, wherein the cylindrical portion extends from an exterior surface of the inlet end wall (310) to a valve seat depth, and the conical portion extends from the valve seat depth to an interior surface of the inlet end wall (310).

5. The pressure relief valve of claim46, wherein the conical portion defines a valve seat angle between 45° and 75°, or wherein the conical portion defines a valve seat angle of between 60° and 70°.

6. The pressure relief valve of any preceding claim, wherein the valve housing (206, 300) comprises a first housing portion defining a first subcavity and a second housing portion defining a second subcavity.

7. The pressure relief valve of claim 6, wherein the valve ball (202, 422), ball carrier (214, 424), and biasing element (204) are arranged within the first subcavity.

8. The pressure relief valve of claim 6, wherein the first housing portion has a smooth interior surface that defines the first subcavity.

9. The pressure relief valve of claim 6, wherein the second housing portion has a threaded interior surface, wherein the end stop element is configured to threadedly engage with the threaded interior surface of the second housing portion.

10. The pressure relief valve of claim 6, wherein the end stop element is configured to fill at least a portion of each of the first subcavity and the second subcavity, and optionally wherein a filter is installed within a filter support cavity of the end stop element within the first subcavity.

11. The pressure relief valve of any preceding claim, wherein a fluid flow path is defined through the pressure relief valve when the valve ball (202, 422) is unseated from the valve seat, the fluid flow path extending from the inlet opening (208, 308, 408), around the valve ball (202, 422), through one or more flow apertures of the ball carrier (214, 424), past the biasing element (204), through a flow passed defined within the end stop element, to an outlet opening defined by an end of the end stop element.

12. The pressure relief valve of any preceding claim, wherein the end stop element defines a keyway at an end thereof, the keyway configured to receive a key to cause rotation of the end stop element and adjust an axial position of the end stop element relative to the valve housing (206, 300).

13. The pressure relief valve of any preceding claim, wherein the end stop element comprises a support portion, a first threaded portion, and a second threaded portion.

14. The pressure relief valve of claim 13, wherein the support portion is configured to receive a filter therein.

15. The pressure relief valve of claim 13, wherein the first threaded portion comprises a first thread on an exterior surface of the end stop element, wherein the first thread is configured to threadedly engage with threads on an interior surface of the valve housing (206, 300), and/or wherein the second threaded portion comprises a second thread on an exterior surface of the end stop element, wherein the second thread is configured to threadedly engage with the locking nut.
